# EUROPEAN PATENT APPLICATION

(11) **EP 2 918 163 A1**
(43) Date of publication of application: **16.09.2015**
(21) Application number: 13853792.3
(22) Date of filing: 06.11.2013
(51) Int. Cl.: A01G 9/02

(54) **PLANTING CONTAINER**

(30) Priority: 08.11.2012 JP 2012246619
(71) Applicant: Suntory Holdings Limited, Osaka-shi, Osaka 530-8203 (JP)
(72) Inventor: HASHIMOTO, Masaki, Tokyo 107-8631 (JP)
(74) Representative: Vossius & Partner Patentanwälte Rechtsanwälte mbB
(86) International application number: PCT/JP2013/080010
(87) International publication number: WO 2014/073565

(57) **Abstract**

A planting container has an inner box 3 capable of housing a water-absorbent planting bed material 30 and an outer box 10 which is fitted over the inner box 3. The outer box 10 includes a front face portion 11 having an opening portion 11A configured to expose the planting bed material 30 housed in the inner box 3 and a tubular portion 12 extending rearwards from the front face portion 11 to receive the inner box 3. The inner box 3 includes, as a water reservoir capable of reserving an amount of planting water, a plurality of water reserving portions 6H, 6V disposed adjacent each other along an inner circumferential face of the tubular portion 12 in such a way to communicate each other.

## Description

### Technical Field

The present invention relates to a planting container having an inner box capable of housing a water-absorbent planting bed material and an outer box which is fitted over the inner box in such a manner as to be capable of exposing the planting bed material housed in the inner box.

### Background Art

Patent Document 1 identified below exists as a prior art document information relating to this type of planting container. According to a planting container disclosed in this Patent Document 1, a planting bed material (vegetation unit) is held in an inner box (base unit) having a square or rectangular tubular shape, and as a picture-frame like outer box (fit-in type frame) is fitted over this inner box from its front side, a plant planted in the inner box or the planting bed material can be displayed, with being exposed through a window-like opening portion provided in the front face of the outer box.

### Prior Art Document

### Patent Document

Patent Document 1: Japanese Unexamined Patent Application Publication No. 2012-115226 (paragraph 0044, Fig. 2, Fig. 3)

### Summary of the Invention

### Problem to be Solved by Invention

However, with the planting container disclosed in Patent Document 1, while the container allows setting thereof selectively under a plurality of postures of different orientations such as a vertical setting, a lateral setting, leak of planting water may occur e.g. via a gap between the inner box and the outer box if watering is effected from outside to the planting bed material with a plant being planted therein in advance.

Meanwhile, Patent Document 1 discloses, as an alternative embodiment, a configuration using a rectangular box (frame) having a water reservoir capable of reserving planting water. However, in the case of this configuration, the water reservoir is no longer present in case the posture of the box is changed from the vertical posture to the lateral posture.

### Means for Solving the Problem

Then, in view of the above-exemplified problem imposed by the prior art, an object of the present invention is to provide a planting container which can be set selectively under a plurality of postures of different orientations, yet which is free from the risk of leak of planting water to the outside which has been supplied to the planting bed material, under whichever one of a plurality of postures the container may be set.

According to a characterizing feature of a planting container relating to the present invention:
a planting container has an inner box capable of housing a water-absorbent planting bed material and an outer box which is fitted over the inner box,
wherein the outer box includes a front face portion having an opening portion configured to expose the planting bed material housed in the inner box and a tubular portion extending rearwards from the front face portion to receive the inner box; and
the inner box includes, as a water reservoir capable of reserving an amount of planting water, a plurality of water reserving portions disposed adjacent each other along an inner circumferential face of the tubular portion in such a way to communicate each other.

According to the planting container having the above-described characterizing configuration, an opening portion configured to expose the planting bed material housed in the inner box is provided in a front face portion of the outer box. Thus, with fitting the outer box housing the planting bed material over the inner box and planting of a plant in the planting bed material, the plant can be displayed as being framed within the frame-like front face portion of the outer box just like a picture frame.

Further, since the inner box includes a plurality of water reserving portions disposed adjacent each other along an inner circumferential face of the tubular portion, the setting orientation used in displaying the planting container can be switched over between a setting orientation at which one water reserving portion is disposed downwards and another setting orientation at which the other water reserving portion is disposed downwards. Moreover, in displaying at whichever setting orientation, the corresponding water reserving portion provides its original function as a water reservoir. So, even if watering is effected to the planting bed material from the outside with a plant being planted in advance therein, there will occur no leak of the planting water from a part of the planting container, so that healthy raising/ cultivation of the plant is made possible.

According to a further characterizing feature of the present invention, the tubular portion defines therethrough a watering hole for introducing planting water to the water reserving portions or the planting bed material.

As a method of daily watering to a plant planted in the planting bed material of the inventive planting container, the plant, depending on its kind, can be raised or maintained under healthy condition by direct watering via e.g. spraying, to the portion of the planting bed material exposed at the opening portion of the front face portion. With the above-described configuration, however, it is possible to introduce a sufficient mount of planting water to the inside of the inner box or the planting bed material through the watering hole with use of a narrow-mouthed watering can or the like. Thus, water management of the plant is facilitated in particular.

According to a further characterizing feature of the present invention, in an inner circumferential face of the tubular portion, there is provided a water flow controlling piece configured to restrain movement of planting water introduced through the watering hole along an inner face of the outer box.

With this characterizing feature, even when planting water introduced through the watering hole tries to move along the inner face of the outer box, this movement will be checked or retrained at least at the portion where the water flow controlling piece is disposed. Accordingly, such inconvenience as inadvertent outflow of the planting water with such movement to the outside of the planting container will hardly occur, so a readily usable planting container can be obtained.

According to a still further characterizing feature of the present invention, the water flow controlling piece includes a guide face extending from the inner circumferential face of the tubular portion toward the radially inner side of the tubular portion.

With this characterizing feature, even if planting water introduced through the watering hole does not fall in the space below the watering hole and flows along the edge portion of this watering hole, this planting water will be caused by the weight of its own to flow along the guide face of the water flow controlling piece toward the radially inner side of the tubular portion, thus moving away from the inner face of the outer box. Therefore, the inadvertent and prolonged movement of planting water along the inner face of the outer box can be prevented even more reliably.

According to a still further characterizing feature of the present invention, the guide face has a portion which comes into contact with an outer circumferential face of the planting bed material.

With this characterizing feature, even if planting water introduced through the watering hole flows to the edge of the watering hole and begins to move along the inner face of the outer box, this planting water will be guided by the guide face of the water flow controlling piece to move eventually to the vicinity of the upper face of the planting bed material. Accordingly, the inadvertent and prolonged movement of planting water along the inner face of the outer box can be prevented and watering to the planting bed material will proceed smoothly.

According to a still further characterizing feature of the present invention, the watering hole comprises at least two watering holes which are disposed adjacent each other along the circumferential direction of the tubular portion to be in opposition to the respective ones of the plurality of water reserving portions; and
the water flow controlling piece includes a plate-like portion extending between the two watering holes with a tilt relative to both respective axes of the two watering holes.

With this characterizing feature, although the water flow controlling piece is a single water flow controlling piece, even when the planting water is introduced through whichever one of the two watering holes, this water will be guided by the plate-like portion toward the radially inner side of the tubular portion. Accordingly, the inconvenience of inadvertent outflow of planting water to the outside of the planting container can be prevented even more reliably.

According to a still further characterizing feature of the present invention, there is provided a rib-like water flow controlling piece which projects rearwards along at least a part of the portion which constitutes the upper edge of the opening portion.

With this characterizing feature, even if planting water introduced through the watering hole should flow down along the back rear face of the front face portion, outflow of this planting water to the outside of the front face portion can be prevented by the rib-like water flow controlling piece.

According to a still further characterizing feature of the present invention, at a portion of the outer box corresponding to the water reserving portion, there is provided a water level check window configured to allow checking of water level in the water reserving portion; and
at least a portion of the inner box corresponding to the water level check window is formed transparent or semi-transparent.

With this characterizing feature, through the transparent or semi-transparent wall face of the inner box and the water level check window, the water surface of the planting water present in the water reserving portion is visible, so that one can readily check the water level of the planting water in the water reserving portion from the outside. Accordingly, inconvenience of watering shortage of the plant or overflowing of the planting water from the edge of the inner box will hardly occur.

According to a still further characterizing feature of the present invention, the front face portion has a rectangular outer shape; and
the plurality of water reserving portions comprise two water reserving portions extending perpendicular to each other.

The planting container according to the present invention can be embodied with its front face portion having a round outer shape, an oval outer shape or a polygonal outer shape of a pentagon or a polygon having more sides. With the above-described configuration, however, such a mode of use as vertically stacking a plurality of planting containers for displaying will be made readily possible.

According to a still further characterizing feature of the present invention, lateral wall portions extending radially inwards from opposed ends of two bottom faces of the inner box interconnected to constitute the two water reserving portions and along the circumferential direction of the tubular portion are provided with a radially outward tilt relative to the respective sides of the front face portion.

If the lateral wall portions extending radially inwards from the opposed ends of two bottom faces of the inner box interconnected to constitute the two water reserving portions and along the circumferential direction of the cylinder portion were configured to extend perpendicularly relative to the respective sides of the front face portion, there would arise a need to keep the size of the planting bed material sufficiently smaller than the inside diameter of the inner box so as to allow smooth entrance/exit of the planting bed material to/from the inner box without being interfered by these lateral wall portions. Accordingly, the amount of planting water that can be reserved in the planting bed material would be reduced, thus tending to be disadvantageous for plant cultivation.

However, if the lateral wall portions are provided with a radially outward tilt relative to the respective sides of the front face portion as provided by the above-described characterizing feature, even a relatively large planting bed material of a size relatively similar to the inner size of the inner box can be smoothly introduced to or taken out of the inner box without fear of interference with the lateral wall portions. Therefore, it becomes possible to reserve a sufficient amount of planting water in the planting bed material, thus being advantageous for cultivation of standard plants.

Moreover, with the above-described configuration, two recess portions that allow a user to insert his/her ringer or the like are formed diagonally, between the tilted side wall portion of the inner box an the outer box. Thus, one can readily introduce or take out the inner box to/out of the outer box, with using these recess portions as "grips".

According to a still further characterizing feature of the present invention, the inner box includes a closing plate portion disposed in opposition to the front face portion of the outer box from the rear side thereof across the planting bed material, thereby to shut (contain) the planting bed material on the inner side of the tubular portion.

If the planting bed material housed in the inner box were exposed to the outside in the vicinity of the rear end of the tubular portion of the outer box, water contained in the planting bed material would evaporate from the rear face portion of the planting bed material, thus drying of the planting bed material would tend to accelerate, which in turn would lead to a need for frequent watering in the case of growing of a plant which constantly requires water, in particular.

With the above-described characterizing feature, however, occurrence of such phenomenon of water contained in the planting bed material evaporating from the rear face portion of the planting bed material exposed in the tubular portion can be retrained. As a result, the planting bed material will be readily maintained at an appropriate water content for a long period of time. Thus, management of the plant will be facilitated even when a plant constantly needing water is to be raised in particular.

### Brief Description of the Drawings

[Fig. 1] is an outer appearance perspective view showing a planting container relating to the present invention as seen from its front face side,
[Fig. 2] is a perspective view showing the planting container under a lateral posture as seen from its rear face side,
[Fig. 3] is a perspective view showing the planting container under a vertical posture as seen from its rear face side,
[Fig. 4] is an exploded perspective view of the planting container and a planting bed material which together constitute a planting device,
[Fig. 5] is a perspective view showing mainly an outer appearance of an inner box constituting the planting container,
[Fig. 6] is a cutaway side view of the planting container under the lateral posture,
[Fig. 7] is a front view illustrating function of a water flow controlling piece under the lateral posture,
[Fig. 8] is a front view illustrating function of the water flow controlling piece under the vertical posture, and
[Fig. 9] is a front view showing function of a water flow controlling piece according to a further embodiment, under the vertical posture.

### Embodiments of the Invention

Next, embodiments of the present invention will be explained with reference to the accompanying drawings.

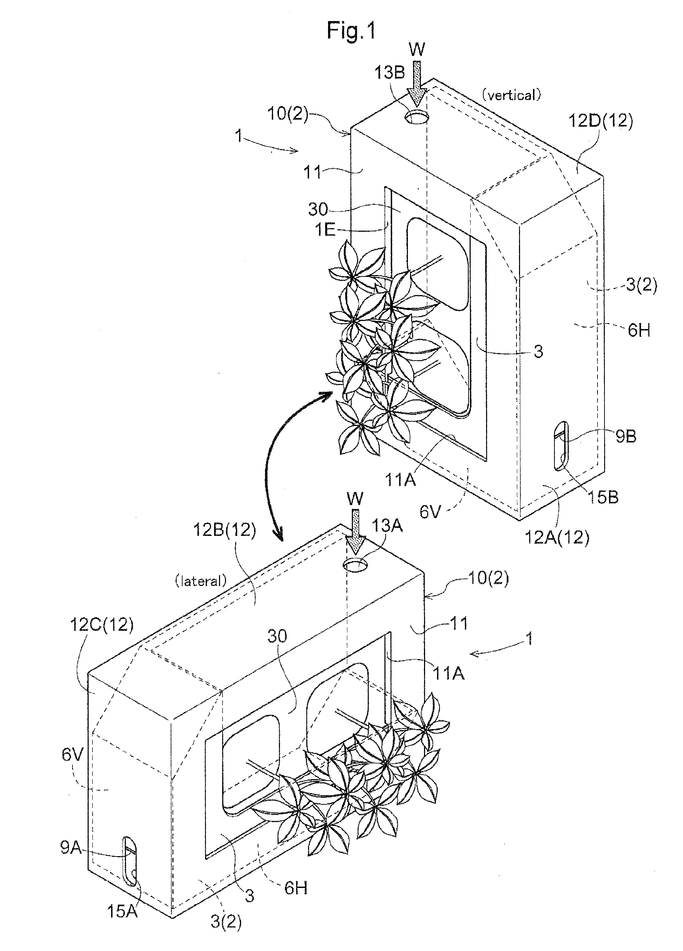

A planting device 1 shown in Fig. 1 includes a planting container 2 relating to the present invention and a water-absorbent planting bed material 30 housed in the planting container 2. The planting container 2 includes an inner box 3 capable of housing the planting bed material 30 therein, and an outer box 10 which is fitted over the inner box 3. The outer box 10 incudes a front face portion 11 having a square/rectangular outer shape.

This planting device 1 can be set under a stable posture, such as on a desk top, under either a lateral posture (shown on the left-lower side in Fig. 1) in which a long side of the front face portion 11 constituting the outer box 10 forms the base side or a vertical posture (shown on the right-upper side in Fig. 1) in which a short side of the front face portion 11 forms the base side.

(Configuration of Outer Box)

The outer box 10 includes the front face portion 11 having a rectangular (an example of square/rectangular shape) outer shape and a tubular portion 12 extending rearwards from an outer circumference of the front face portion 11.

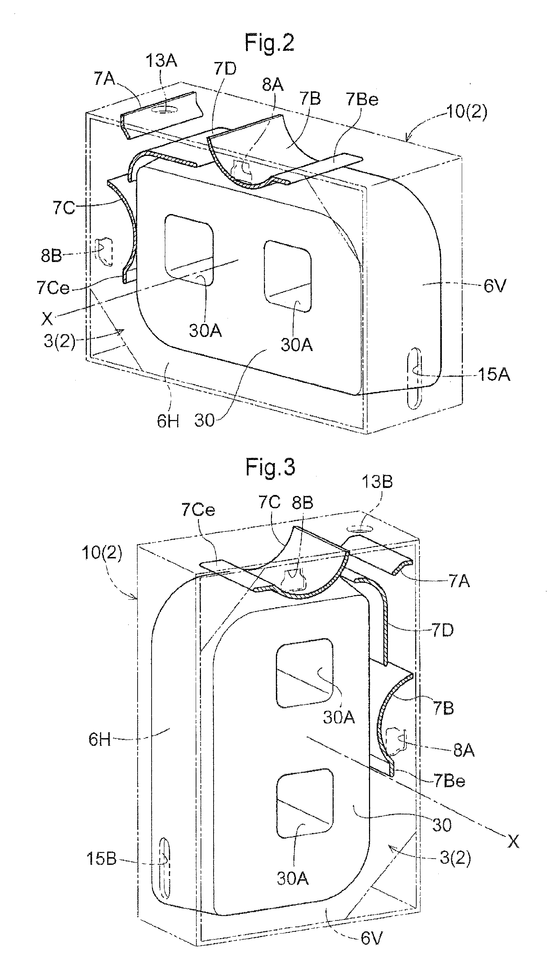

Here, as shown in Fig. 2 showing the planting device 1 as seen from its rear face side, a line segment that extends parallel with all of four rectangular plate members together constituting the tubular portion 12 is defined as an axis X of the planting container. 2.

The rear end portion of the tubular portion 12 is open so as to receive the inner box 3 from the rear side approximately along the direction of the axis X. The front face portion 11 defines a rectangular opening portion 11A for causing a portion of the planting bed material 30 housed in the inner box 3 to be exposed on the front face side.

As shown in Fig. 3 showing the outer box 10, the inner box 3 and the planting bed material 30 separately, of the four rectangular plate members together constituting the tubular portion 12 of the outer box 10, the plate member disposed downwards under the lateral posture will be defined as a first wall portion 12A, the plate member disposed upwards under the lateral posture will be defined as a second wall portion 12B, the plate member disposed downwards under the vertical posture will be defined as a third wall portion 12C and the plate member disposed upwards under the vertical posture will be defined as a fourth wall portion 12D, respectively.

### (Configuration of Watering Hole)

As means for watering from outside to the planting bed material 30 housed in the inner box 3, a first watering hole 13A for use under the lateral posture is defined through the vicinity of the right end of the second wall portion 12B which is disposed upwards under the lateral posture. A second watering hole 13B is defined through the vicinity of the left end of the fourth wall portion 12D which is disposed upwards under the vertical posture.

The first watering hole 13A and the second watering hole 13B are disposed adjacent each other along the circumferential direction of the tubular portion 12 so as to sandwich therebetween one of four corner portions of the tubular portion 12.

### (Configuration of Inner Box)

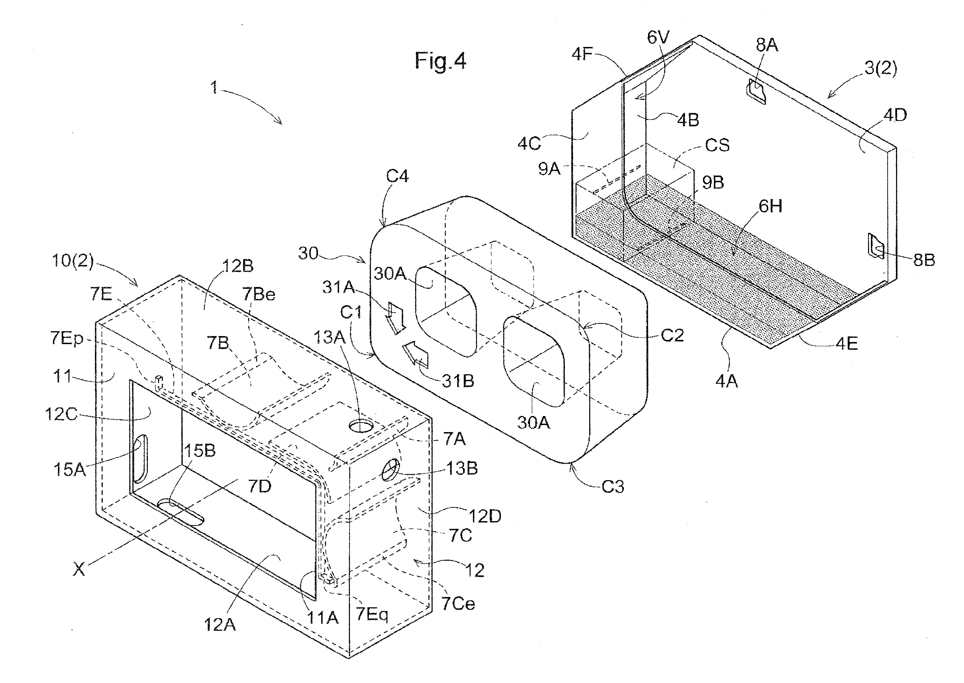

As shown in Fig. 4, the inner box 3 includes a rectangular first bottom face portion 4A which extends horizontally along the first wall portion 12A of the tubular portion 12 with the outer box 10 being over this inner box 3, thus acting as the base side when the planting container 2 is placed under the lateral posture, and a rectangular second bottom face portion 4B which extends horizontally along the third wall portion 12C of the tubular portion 12, thus acting as the base side when the planting container 2 is placed under the vertical posture.

Further, the inner box 3 includes a first side wall portion 4C extending radially inwards from the front end faces of the first bottom face portion 4A and the second bottom face portion 4B, and a second side wall portion 4D extending radially inwards from the rear end faces of the first bottom face portion 4A and the second bottom face portion 4B.

The first side wall portion 4C extends along the rear face of the front face portion 11 of the outer box 10, and the second side wall portion 4D extends parallel with the first side wall portion 4C so as to sandwich the planting bed material 30 housed in the inner box 3 therebetween.

The first side wall portion 4C presents an approximately L-shape to bypass a planting portion 30A provided at the center of the front face of the planting bed material 30.

Under the condition of the outer box 10 being fitted over the inner box 3, a portion of the L-shaped first side wall portion 4C of the inner box 3 offset radially inwards is exposed with radially inward offset through the opening portion 11A of the front face portion 11.

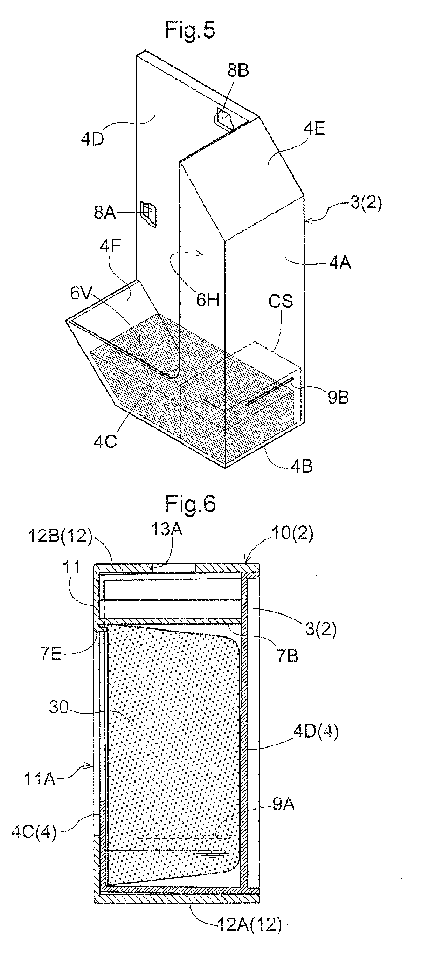

As shown in Fig. 6, the second side wall portion 4D on the rear side of the inner box 3 is placed from the rear side in opposition to the front face portion 11 of the outer box across the planting bed material 30, thus serving as a "closing plate portion" configured to shut (contain) the planting bed material 30 on the inner side of the tubular portion 12.

The inner box 3 further includes a rectangular third side wall portion 4E extending radially inwards from the circumferential end of the first bottom face portion 4A and a rectangular fourth side wall portion 4F extending radially inwards from the circumferential end of the second bottom face portion 4B.

The third side wall portion 4E is configured such that a portion thereof which forms an upper end of the first side wall portion 4C when the planting container 2 is set under the vertical posture extends to be connected to the second side wall portion 4D; and the fourth side wall portion 4F is configured such that a portion thereof which forms an upper end of the first side wall portion 4C when the planting container 2 is set under the lateral posture extends to be connected to the second side wall portion 4D.

The second side wall portion 4D of the inner box 3 defines therethrough retaining recesses 8A, 8B for receiving and engaging a hook (not shown) or the like which is mounted on a wall surface and inserted therein. Specifically, the retaining recesses 8A, 8B consist of the retaining recess 8A for the lateral setting and retaining recess 8B for the vertical setting. Thus, in this case too, the planting device 1 (planting container 2) can be displayed under either the lateral posture or vertical posture.

The side wall portions extending radially inwards from the opposed ends along the circumferential direction of the tubular portion 12, namely, the third side wall portion 4E and the fourth side wall portion 4F, are provided with radially outward tilt relative to the respective sides of the front face portion 11. In the drawing, the angle of this tilt is shown as 45 degrees approximately. But, any angle can be selected from the range of 30 to 60 degrees.

### (Configuration of Planting Bed Material)

The planting bed material 30 is provided in the form of a block molded of mixture of e.g. urethane and pulverized sawdust or the like and this material 30 is capable of retaining water and air in good balance substantially uniformly throughout its block and capable also of readily maintaining an amount of air therein required for growth of root of plant. As shown Fig. 4, the planting bed material 30 defines therethrough two planting through holes 30A for planting young plants or the like, which are disposed side by side on the left and right under the lateral posture.

As shown in Fig. 4, when the planting bed material 30 set in the inner box 3 is seen from its front side, arcuate corner portions C1, C2, C3, C4 are formed at four corners of the planting bed material 30. The radius of curvature of each corner portion C1, C2, C3, C4 is set such that the planting bed material 30 may maximally conform to the inner surface shape of the inner box 3 and also that the planting bed material 30 will hardly interfere with respective water flow controlling pieces 7A, 7B, 7C, 7D.

More particularly, among a curvature radius R1 of the corner portion C1 disposed at the portion (common portion CS) of the inner box 3 where a first water reserving portion 6H and a second water reserving portion 6V intersect each other, a curvature radius R2 of the corner portion C2 disposed on the diagonal line of the corner portion C1, a curvature radius R3 of the corner portion C3 disposed at the first water reserving portion 6H adjacent the third side wall portion 4E and a curvature radius R4 of the corner portion C4 disposed at the second water reserving portion 6V adjacent the fourth side wall portion 4F, there is set generally a relationship of (R1=R2<R3<R4).

As shown in Fig. 4, at a part of the front face of the planting bed material 30, there are formed, in the form of shallow recesses, arrow-like indices 31A, 31B for indicating the proper orientation setting of the planting bed material 30 relative to the inner box 3.

The indices 31A, 31B comprise a first index 31A which is directed downwards under the lateral posture and a second index 31B which is directed downwards under the vertical posture, both of which are provided in correspondence with portions (common portions CS) where the first water reserving portion 6H and the second water reserving portion 6V intersect each other in the inner box 3.

### (Configuration of Water Reservoir)

As shown in Figs. 1 through 4, the inner box 3 includes, as water reservoir capable of reserving an amount of planting water W therein, two water reserving portions, i.e. the first water reserving portion 6H for use under the lateral posture and the second water reserving portion 6V for use under the vertical posture.

When the outer box 10 is fitted over the inner box 3, the first water reserving portion 6H extends along the first wall portion 12A which is disposed downwards under the lateral posture and is placed in opposition to the first watering hole 13A which is oriented downwards under the lateral posture. Similarly, the second water reserving portion 6V extends along the third wall portion 12C which is disposed downwards under the vertical posture and is placed in opposition to the second watering hole 13B which is oriented downwards under the vertical posture.

Therefore, under the lateral posture, an excess of planting water W introduced via the first watering hole 13A is reserved in the first water reserving portion 6H; and under the vertical posture, an excess of planting water W introduced through the second watering hole 13B is reserved in the second water reserving portion 6V.

As may be understood from Fig. 4 illustration, in the first water reserving portion 6H for the lateral posture, the first bottom face portion 4A acts as the bottom face, whereas what acts as side faces extending erect from the four sides of the bottom face are the third side wall portion 4E, the portion of the second bottom face portion 4B opposed to the third side wall portion 4E in the lateral direction, the long side of the L-shaped first side wall portion 4C, and the portion of the second side wall portion 4D opposed to the long side of the L-shaped first side wall portion 4C in the front/rear direction.

In the second water reserving portion 6V for the vertical posture, the second bottom face portion 4B acts as the bottom face, whereas what acts as side faces extending erect from the four sides of the bottom face are the fourth side wall portion 4F, the portion of the first bottom face portion 4A opposed to the fourth side wall portion 4F in the lateral direction, the short side of the L-shaped first side wall portion 4C, and the portion of the second side wall portion 4D opposed to the short side of the L-shaped first side wall portion 4C in the front/rear direction.

The first water reserving portion 6H and the second water reserving portion 6V extend perpendicularly to each other to be communicated with each other as these portions 6H, 6V share the common portion CS in the form of a rectangular solid at the corner of the inner box 3. And, when the outer box 10 is fitted over the inner box 3, the first and second water reserving portions 6H, 6V are disposed adjacent each other along the inner circumferential face of the tubular portion 12.

### (Configuration of Water Flow Controlling Piece)

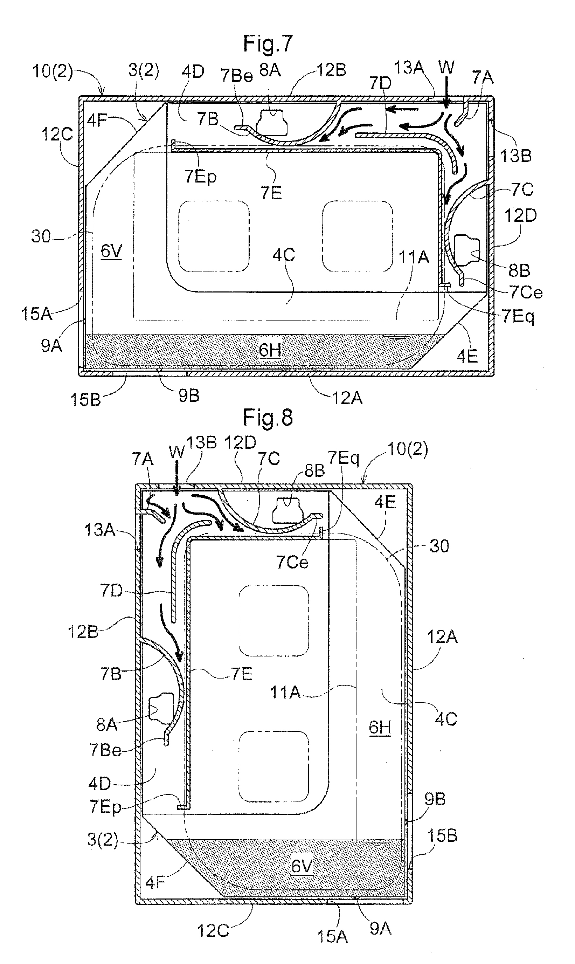

As shown in Fig.2, Fig. 3 and Fig. 7 and in Fig. 8, on the inner circumferential face of the tubular portion 12, the water flow controlling pieces 7A, 7B, 7C, 7D are provided for controlling the flowing direction of the planting water W inside the planting container 2 which has been introduced via the first watering hole 13A or the second watering hole 13B.

The water flow controlling pieces consist of the first water flow controlling piece 7A, the second water flow controlling piece 7B, the third water flow controlling piece 7C, the fourth water flow controlling piece 7D, and the fifth water flow controlling piece 7E.

The first water flow controlling piece 7A extends radially inwards from the portion between the first watering hole 13A and the second watering hole 13B in the inner circumferential face of the tubular portion 12.

The second water flow controlling piece 7B extends radially inwards from the portion away from the first watering hole 13A opposite the first water flow controlling piece 7A in the inner face of the second wall portion 12B which is disposed upwards under the lateral posture.

The third water flow controlling piece 7C extends radially inwards from the portion away from the second watering hole 13B opposite the first water flow controlling piece 7A in the inner face of the fourth wall portion 12D which is disposed upwards under the vertical posture.

The fourth water flow controlling piece 7D extends rearwards, not from the tubular portion 12 of the outer box 10, but from the rear face of the front face portion 11.

The fifth water flow controlling piece 7E is formed in the form of a relatively low profiled rib-like projection extending rearwards along at least a portion which forms the upper edge of the opening portion 11A under the lateral posture and the vertical posture.

Of these water flow controlling pieces, the first, second and third water flow controlling pieces 7A, 7B, 7C, as respectively having a guide face extending radially inwards from the inner circumferential face of the tubular portion 12, stop, at a predetermined position, the planting water W introduced via the first watering hole 13A or the second watering hole 13B which may have moved in the circumferential direction along the inner face of the tubular portion 12 and then guide the water radially inwards.

As a result, it becomes possible to prevent the moving planting water W from leaking eventually to the outside from the opening portion 11A of the front face portion 11 or the rear end of the tubular portion 12 for instance.

Among the above-described three water flow controlling pieces 7A, 7B, 7C, the first water flow controlling piece 7A has the shortest extension, but exhibits a shape of a plate extending similarly with a tilt relative to both the axes of the watering holes 13A, 13B between these two watering holes 13A, 13B.

Consequently, the first water flow controlling piece 7A, though provided as a single member, is capable of restraining, under the lateral posture, the planting water W introduced through the first watering hole 13A from flowing along the inner face of the second wall portion 13B to reach the fourth wall portion 12D and restraining also, under the vertical posture, the planting water W introduced through the second watering hole 13B from flowing along the inner face of the fourth wall portion 12D to freely fall down the inner face of the second wall portion 12B.

As shown in Fig. 7 and Fig. 8, the first water flow controlling piece 7A includes a base end side portion extending generally parallel with the fourth wall portion 12D from a portion in the inner face of the second wall portion 12B, with an offset closer to the fourth wall portion 12D than the first watering hole 13A, and a leading end side portion that extends obliquely from this base end side portion toward the vicinity of the axis X.

The respective front side end of the first, second and third water flow controlling pieces 7A, 7B, 7C is formed integral with the rear face of the front face portion 11. Further, opposed faces of the curved plate-like member constituting the first, second and third water flow controlling pieces 7A, 7B, 7C respectively have a two-dimensional shape extending parallel with the axis X, so the outer box 10 can be easily manufactured by injection molding of resin.

The opposed faces of the curved plate member constituting the fourth water flow controlling piece 7D also have a two-dimensional shape extending parallel with the axis X. The fourth water flow controlling piece 7D provides a function of restraining inadvertent movement or displacement of the planting bed material 30, as well as a function of restraining a phenomenon that the planting water injected in a gush via the first watering hole 13A or the second watering hole 13B from being bounced or splashed back by the planting bed material 30 toward the first watering hole 13A or the second watering hole 13B.

The second and third water flow controlling pieces 7B, 7C each extends in the form of an arc having its center more outwards than the tubular portion 12 of the outer box 10 and the most radially inwards guide face corresponding to its intermediate portion is configured to come into contact with the outer circumferential face of the planting bed material 30 at least when this planting bed material 30 is bulged by the planting water W.

The radially inwardly oriented faces of the second and third water flow controlling pieces 7B, 7C serve as guide faces for guiding the planting water W, so that the planting water W is supplied securely to the planting bed material30 via portions thereof in contact with this planting bed material 30. Further, these portions of the second and third water flow controlling pieces 7B, 7C in contact with the planting bed material 30 have arcuate shape having a center thereof on the radially outer side, so that there is little risk of damage to the planting bed material 30 when the bulged planting bed material 30 is pressed against them.

From the leading ends of the second and third water flow controlling pieces 7B, 7C, short straight auxiliary extension portions 7Be, 7Ce extend generally parallel with the tubular portion 12 adjacent thereto. More particularly, the auxiliary extension portion 7Be provided in the second water flow controlling piece 7B extends generally parallel with the second wall portion 12B of the tubular portion 12 and the auxiliary extension portion 7Ce provided in the third water flow controlling piece 7C extends generally parallel with the fourth wall portion 12D of the tubular portion 12.

The auxiliary extension portion 7Be provided in the second water flow controlling piece 7B provides a function of preventing the planting water W flowing down in a gush along the second water flow controlling piece 7B mainly under the vertical posture from moving near the inner face of the second wall portion 12B and guiding it to flow down straight.

Similarly, the auxiliary extension portion 7Ce provided in the third water flow controlling piece 7C provides a function of preventing the planting water W flowing down in a gush along the third water flow controlling piece 7C mainly under the lateral posture from moving near the inner face of the fourth wall portion 12D and guiding it to flow down straight.

As shown in Fig. 6, Fig. 7 and Fig. 8, the fifth water flow controlling piece 7E extends in L-shape along most of the portion of the opening portion 11A which forms the upper edge under the lateral posture and the further portion of the same which forms the upper edge under the vertical posture and projects, in the form of a rib, rearwards from the opening portion 11A.

An amount of the planting water W which has been introduced via the first watering hole 13A or the second watering hole 13B and flown down along the rear face of the front face portion 11 will mostly be absorbed by the planting bed material 30. However, even if it cannot entirely be absorbed by the planting bed material 30, outflowing of the planting water W from the opening portion to the outside of the front face portion is effectively prevented by the rib-like fifth water flow controlling piece 7E.

Further, as shown in Fig. 7 and Fig. 8, the fifth water flow controlling piece 7E extending in the L-shape is interrupted at a position before the first lateral wall portion 4C of the inner box 3 and forms two end portions. At these end portions, there are integrally formed relatively short auxiliary extension portions 7Ep, 7Eq toward the radially outer side.

Therefore, the auxiliary extension portions 7Ep, 7Eq prevent the planting water W which has flowed along the vicinity of the border between the fifth water flow controlling piece 7E and the rear face of the front face portion 11 from flowing from the end portions of the fifth water flow controlling piece 7E to the outside of the front face portion.

Incidentally, the rear end faces of the water flow controlling pieces 7A, 7B, 7C, 7D together form a single virtual plane. So that, when the outer box 10 is fitted over the inner box 3, the respective rear end faces of the water flow controlling pieces 7A, 7B, 7C, 7D simultaneously come into contact with the inner face of the second side wall portion 7D of the inner box 3, thereby to prevent excessive entrance of the second side wall portion 4D to the inside of the outer box 10.

As may be understood from Fig. 7 and Fig. 8, as the third side wall portion 4E and the fourth side wall portion 7F of the inner box 3 are provided with the radially outward tilt relative to the respective sides of the front face portion 11, mounting and dismounting of the planting bed material 30 can be carried out smoothly and damage to the planting bed material 30 will hardly occur.

Further, at two inner portions of the outer box 10 fitted, there are formed triangular-prism like recesses extending in the front/rear direction are formed. This facilitates an operation of drawing the inner box 3 out of the outer box 10.

### (Configuration of Water Level Check Window)

In the instant embodiment, the outer box 10 entirely is formed of a non-transparent material, whereas the inner box 3 entirely is formed of a transparent material.

As shown in e.g. Fig. 1, at portions of the outer box 10, there are formed therethrough water level check windows 15A, 15B configured to allow checking water levels of the water reserving portions 6H, 6V of the inner box 3 from the outside.

The water level check windows 15A, 15B consist of the first water level check window 15A provided at a portion corresponding to the first water reserving portion 6H and the second water level check window 15B provided at a portion corresponding to the second water reserving portion 6V. Both of these have vertically elongated circular shape under the posture used therefor.

At least, the first water level check window 15A for the lateral posture has a vertical extension from the level of the bottom face (approximately zero level) of the first water reserving portion 6H from the lower side thereof to the level (height) of the upper end (full water level) of the long side of the L-shaped first side wall portion 4C.

The second water level check window 15B for the vertical posture has a vertical extension from the level of the bottom face (approximately zero level) of the second water reserving portion 6V to a level slightly higher than the upper end (full water level) of the short side of the L-shaped first side wall portion 4C. Instead of this, this second water level check window 15B can be configured similarly to the first water level check window 15A.

At portions of the outer surface of the inner box 3, there are provided, in the form of outward projections, horizontally extending straight-shaped water level indices 9A, 9B as means for indicating reference water levels.

The water level indices 9A, 9B are provided slightly upwardly of the vertical centers of the water level check windows 15A, 15B corresponding thereto. In operation, under the lateral posture and the vertical posture, as long as the water level of the planting water W seen via the water level check window 15A, 15B is present near the water level index 9A, 9B, there is no risk of the planting water W overflowing from the first side wall portion 4C of the inner box 3 to the outside.

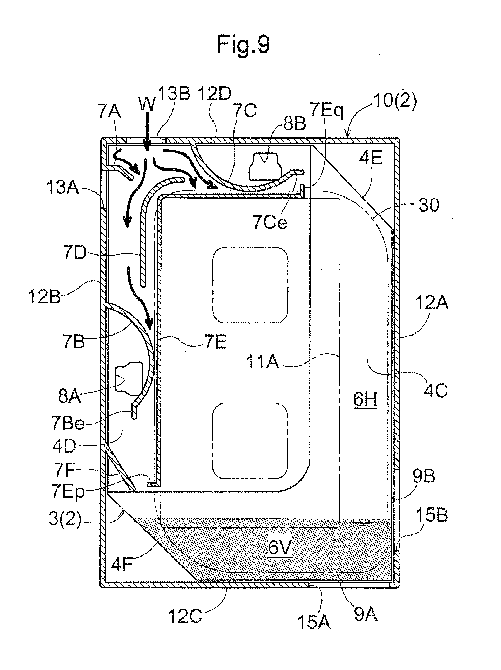

As illustrated in Fig. 9, as a means for controlling flow of planting water which moves downwards away along the lower-end auxiliary extension portion 7Be of the second water flow controlling piece 7B under the vertical posture, there may be provided a sixth water flow controlling piece 7F disposed in opposition to the auxiliary extension portion 7Be.

This sixth water flow controlling piece 7F has a rectangular flat plate like shape extending obliquely downwards from the portion lower than the auxiliary extension portion 7Be of the inner face of the second wall portion 12B toward the portion of the second water reserving portion 6V of the inner box 3.

The sixth water flow controlling piece 7F also extends parallel with the axis X from the rear face of the front face portion 11, with a length similar to that of the other e.g. the second, water flow controlling piece 7B. The lower end of the sixth water flow controlling piece 7F under the vertical posture is located adjacent an intermediate position between the auxiliary extension portion 7Ep of the fifth water flow controlling piece 7E and the upper end of the tilted fourth side wall portion 4F of the inner box 3.

### [Other Embodiments]

<1> The outer shapes of the front face portion 11 and the tubular portion 12 of the outer box 10 need not be rectangular or square, but can be polygonal shape such as pentagonal shape, or can also be circular or oval shape. In the case of circular or oval shape, by providing leg portions on the outer circumference of the tubular portion, stable mounting on a horizontal surface such as a desktop is made possible. However, even with omission of such leg portions, if the two retaining recesses 8A, 8B are provided in the inner box 3 like the above-described first embodiment, such mode of displaying as suspension or hanging from a wall surface will be possible. And, in such case too, a plurality of displaying modes with different orientations will be possible.
<2> The inner box 3 need not be formed of a transparent material. Instead, the inner box 3 can be formed transparent or semi-transparent e.g. only at portions thereof corresponding to the water level check windows 15A, 15B, with the most of the remaining portion thereof being formed of non-transparent material.
<3> The two watering holes 13A, 13B need not be provided independently of each other. For instance, at one corner portion of the tubular portion 12, there may be provided a single watering hole which can be used for both the lateral posture and the vertical posture. In tis case, instead of the first water flow controlling piece 7A described in the first embodiment and usable for both the lateral posture and the vertical posture, two first water flow controlling pieces may be provided on the opposed sides of the single watering hole, for the lateral posture and the vertical posture, respectively.
<4> The two water level check windows 15A, 15B need not be provided independently of each other. Instead, for instance, in two faces across one corner portion of the tubular portion 12, a single water level check window can be provided which consists of a water level check window portion for the vertical posture and a water level check window portion for the lateral posture, with these water level check window portions extending continuously from each other. Incidentally, in case the outer box 10 is formed of a transparent material, any water level check windows need not be formed therethrough in particular.

### Industrial Applicability

The present invention is an invention usable as a solution to the problem conventionally suffered by a planting container having an inner box capable of housing a water-absorbent planting bed material and an outer box which is fitted over the inner box with allowing the planting bed material housed in the inner box to be exposed to the outside.

### Description of Reference Marks/Numerals

- 1: planting device
- 2: planting container
- 3: inner box
- 4D: second side wall portion (closing plate portion)
- 4E: third side wall portion (tilted side wall portion)
- 4F: fourth side wall portion (tilted side wall portion)
- 6H: first water reserving portion (water reservoir)
- 6V: second water reserving portion (water reservoir)
- 7A: first water flow controlling piece (water flow controlling piece)
- 7B: second water flow controlling piece (water flow controlling piece)
- 7C: third water flow controlling piece (water flow controlling piece)
- 7E: fifth water flow controlling piece (water flow controlling piece)
- 10: outer box
- 11: front face portion
- 11A: opening portion
- 12: tubular portion
- 13A: first watering hole (watering hole)
- 13B: second watering hole (watering hole)
- 15A: first water level check window (water level check window)
- 15B: second water level check window (water level check window)
- 30: planting bed material
- W: planting water
- X: axis

## Claims

1. A planting container having an inner box capable of housing a water-absorbent planting bed material and an outer box which is fitted over the inner box,
wherein the outer box includes a front face portion having an opening portion configured to expose the planting bed material housed in the inner box and a tubular portion extending rearwards from the front face portion to receive the inner box; and
the inner box includes, as a water reservoir capable of reserving an amount of planting water, a plurality of water reserving portions disposed adjacent each other along an inner circumferential face of the tubular portion in such a way to communicate each other.

2. The planting container according to claim 1, wherein the tubular portion defines therethrough a watering hole for introducing planting water to the water reserving portions or the planting bed material.

3. The planting container according to claim 2, wherein in an inner circumferential face of the tubular portion, there is provided a water flow controlling piece configured to restrain movement of planting water introduced through the watering hole along an inner face of the outer box.

4. The planting container according to claim 3, wherein the water flow controlling piece includes a guide face extending from the inner circumferential face of the tubular portion toward the radially inner side of the tubular portion.

5. The planting container according to claim 4, wherein the guide face has a portion which comes into contact with an outer circumferential face of the planting bed material.

6. The planting container according to any one of claims 3 through 5, wherein the watering hole comprises at least two watering holes which are disposed adjacent each other along the circumferential direction of the tubular portion to be in opposition to the respective ones of the plurality of water reserving portions; and
the water flow controlling piece includes a plate-l.ike portion extending between the two watering holes with a tilt relative to both respective axes of the two watering holes.

7. The planting container according to any one of claims 1 through 6, wherein there is provided a rib-like water flow controlling piece which projects rearwards along at least a part of the portion which constitutes the upper edge of the opening portion.

8. The planting container according to any one of claims 1 through 7, wherein at a portion of the outer box corresponding to the water reserving portion, there is provided a water level check window configured to allow checking of water level in the water reserving portion; and
at least a portion of the inner box corresponding to the water level check window is formed transparent or semi-transparent.

9. The planting container according to any one of claims 1 through 8, wherein the front face portion has a rectangular outer shape; and
the plurality of water reserving portions comprise two water reserving portions extending perpendicular to each other.

10. The planting container according to claim 9, wherein lateral wall portions extending radially inwards from opposed ends of two bottom faces of the inner box interconnected to constitute the two water reserving portions and along the circumferential direction of the tubular portion are provided with a radially outward tilt relative to the respective sides of the front face portion.

11. The planting container according to any one of claims 1 through 10, wherein the inner box includes a closing plate portion disposed in opposition to the front face portion of the outer box from the rear side thereof across the planting bed material, thereby to shut the planting bed material on the inner side of the tubular portion.
